# EUROPEAN PATENT APPLICATION

(11) **EP 3 076 268 A1**
(43) Date of publication of application: **05.10.2016**
(21) Application number: 15169853.7
(22) Date of filing: 29.05.2015
(51) Int. Cl.: G06F 3/01, H04N 5/44, H04N 21/422, G06F 3/0488, G06F 3/0346

(54) **AN OPERATING SYSTEM, WEARABLE DEVICE, AND OPERATION METHOD**

(30) Priority: 31.03.2015 US 201514675357
(71) Applicant: Sony Corporation, Tokyo 108-0075 (JP)
(72) Inventor: TOKUTAKE, Kenji, Minato-ku, Tokyo 108-0075 (JP)
(74) Representative: D Young & Co LLP

(57) **Abstract**

A system of a wearable computing device equipped with a motion detection sensor, a touch panel, and wireless communication circuitry that communicates with a terminal computing device equipped with a display and additional wireless communication circuitry, for the purpose of controlling the display output, cursor movement, and functions on the terminal device with input data detected through the wearable device.

## Description

This invention relates in general but not exclusively to a system for communication between wearable electronic devices and various electronic devices, and an operation method applied to the system, by which a user wirelessly controls the functions of various electronic devices, using inputs such as motion, gesture, and touch applied to a wearable electronic device.

Wearable devices, for example smart watches, smart glasses, and digital health monitors, have additional user interfaces which contain functionality such as the ability to tell time, and to receive notification of email, text messages and calls. Furthermore, wearable devices equipped with motion sensors can provide data, for example steps walked, distance run, similar measurements for a variety of purposes.

Some wearable electronic devices are equipped with Near Field Communication (NFC) capability that lets them use various wireless communication protocols such as Bluetooth and wireless Local Area Network (wLAN) to interact with other devices for example, smart phones, tablets, laptop and desktop computers, and in-car infotainment systems.

The relatively small display size of wearable devices can limit utility when compared to those of a computer monitor, a screen on a tablet or a screen on a smart phone. However, the utility of wearable devices can be enhanced by combining wireless communication and motion sensing capabilities to interact with other nearby devices in novel ways.

The disclosure pertains to an electronic wearable device worn by a user communicates with and controls cursor movement and image display on the screen of a terminal device, for example a smart phone, tablet or laptop computer. The terminal device may also simultaneously transfer image data to a separate display device, for example a monitor or projector, without the terminal device necessarily displaying the contents of the terminal device's screen.

The user of the wearable device is also able to switch wireless control to and from a terminal device among a plurality of terminal devices, by predetermined motion using the wearable device.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
Fig. 1A is an outline of a system of this invention comprising a wearable device and terminal device;
Fig. 1B is an outline of a system of this invention comprising a wearable device, a terminal device, and a monitor;
Fig. 1C is an outline of a system of this invention comprising a wearable device, a terminal device, and a head mounted display;
Fig. 1D is an outline of a system of this invention comprising a wearable device, a terminal device, a projector, and a projection screen;
Fig. 2 is a schematic depiction of a terminal device;
Fig. 3 is a schematic depiction of a wearable device;
Fig. 4 is a block diagram of an operation of an acceleration sensor;
Fig. 5 is a block diagram of an operation of a gyro sensor;
Fig. 6 is a block diagram of a data transmission process between a wearable device and a terminal device;
Fig. 7 is a block diagram of a data transmission process between a wearable device and a terminal device;
Fig. 8 is a view of a display of a wearable device;
Figs. 9 through 15 show example user operations of a wearable device, and resulting operations of a terminal device.
Fig. 16 is an outline of a process of selection of a terminal device based on angular position of a wearable device;
Fig. 17 is a schematic of a communication process between a wearable device and three separate terminal devices;
Fig. 18 is an outline of a process of setting angular positions of a wearable device for switching between three separate terminal devices;
Fig. 19 is a diagram of a process of communication between a wearable device, two separate terminal devices, and a monitor;
Fig. 20A is a view of a touch operation on a display of a wearable device;
Fig. 20B is a view of a resulting message on a display of a wearable device;
Fig. 21 is an illustration of an embodiment of a function of the wearable device that detects fine motion of the user's fingers;
Fig. 22 is an illustration of an embodiment of a function of the wearable device with a slider for adjusting tap sensitivity.

In the drawings, like reference numerals designate identical or corresponding parts throughout the several views. Further, as used herein, the words "a", "an" and the like generally carry a meaning of "one or more", unless stated otherwise. The drawings are generally drawn to scale unless specified otherwise or illustrating schematic structures or flowcharts.

Furthermore, the terms "approximately," "approximate" and similar terms generally refer to ranges that include the identified value within a margin of 20%, 10% or preferably 5% in certain embodiments, and any values there between.

A "control line" may generally refer to the paths of communication among the components and subsystems of an electronic apparatus, for example. A "data line" may generally refer to the paths of data exchange among the components and subsystems of an electronic apparatus, for example. A "head mounted display" may refer to one of a plurality of wearable devices a user wears on the head, and which displays or otherwise projects text and images into the user's field of view, for example smart glasses. A "motion sensor" may generally refer to a component or system of components that detects movement, generally in both angular and linear directions. "Multi-pairing" may refer to the condition of having established wireless communications between more than two devices simultaneously. The terms "pitch", "roll", and "yaw" generally refer to angular rotation about three axes, for example X, Y, and Z, respectively. "Short distance communication" may generally refer to wireless communication protocols and technologies that operate within a limited range, generally between devices from a few feet apart up to a maximum distance of approximately 30 to 100 feet, for example, Bluetooth and Near Field Communication (NFC). A "terminal" and "terminal device" are used interchangeably, and may generally refer to a computing apparatus that receives, processes and transmits signals wirelessly, for example a smart phone, tablet, or laptop computer. Furthermore, "wearable device", used interchangeably with "wearable device", may generally refer to a computing apparatus worn by a user, is generally equipped with one or more motion sensors, and which transmits and receives signals wirelessly from other apparatus, for example, "smart watches", fitness tracking devices, and head mounted displays. Furthermore, "movement data" may generally refer to at least one of a plurality of data sources, including from a motion detector and a touch panel. Similarly, "movement sensor" may generally refer to at least one of a plurality of sensors, for example a motion detection sensor and a touch panel.

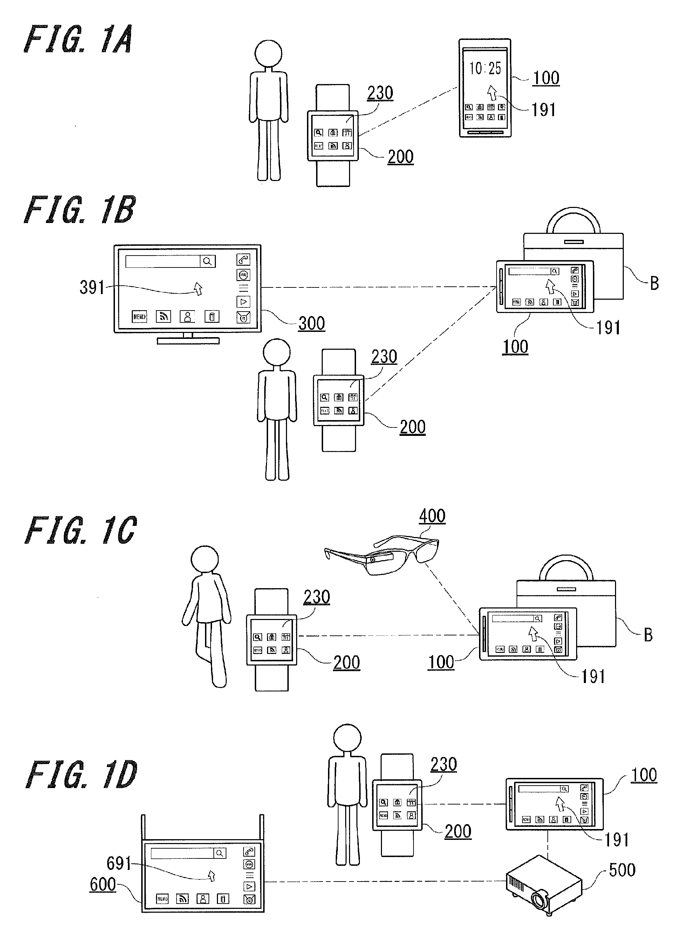

FIG. 1 outlines a system of this embodiment comprising a terminal device 100 and a wearable device 200 which communicate with a plurality of devices wirelessly. In the embodiment of FIG. 1A the wearable device 200 is equipped with the touchscreen 230 and the motion sensor 208. The touchscreen 230 produces detection data as a result of a user's touch. The motion sensor 208 detects movement by the user while wearing the wearable device 200. These types of data are transmitted to the terminal device 100 via wireless communications, and can be used to move the cursor 191 in the terminal device 100. Thus, the wearable device 200 can be used to control movement of the cursor 191 and switch between functions, such as display modes, shown on the screen of the terminal device 100.

In the embodiment of FIG. 1B the wearable device 200 is equipped with the touchscreen 230 and the motion sensor 208. A user can wirelessly control the position of the cursor 191 on the terminal device 100 by virtual touch through operation of the touchscreen 230 or through gesture input by the user while wearing the wearable device 200. Further, terminal device 100 communicates wirelessly with a non-portable monitor apparatus 300, which displays an expanded view of the image produced by or shown on the display of terminal device 100. Thus, the wearable device 200 can be used as the primary input device by which interact with a terminal device 100 or a monitor apparatus 300, for example to control the position of the cursor 191 and switch between functions, such as display modes, which may be shown on the screen of the terminal device 100, as well as the cursor 391 shown on the screen of the monitor apparatus 300. It is not necessary for the screen of terminal device 100 to be illuminated in order for the screen of apparatus 300 to display the contents of terminal device 100, allowing terminal device 100 to remain in a bag, pocket or other enclosure while still in use in conjunction with terminal device 100 and the monitor apparatus 300.

In the embodiment of FIG. 1C the wearable device 200 is equipped with the touchscreen 230 and the motion sensor 208. A user can wirelessly control the position of the cursor 191 on the terminal device 100 by operation of the touchscreen 230 or through movement by the user while wearing the wearable device 200. Further, terminal device 100 communicates wirelessly with a head mounted display apparatus 400, which displays a view of the image produced by or shown on the display of terminal device 100. Thus, the wearable device 200 can be used to control the position of the cursor 191 and switch between functions, such as display modes, which may be shown on the screen of the terminal device 100, as well as control the cursor 491 shown on the screen of the head mounted display apparatus 400. It is not necessary for the screen of terminal device 100 to be illuminated in order for the screen of apparatus 400 to display the contents of terminal device 100, allowing terminal device 100 to remain in a bag, pocket or other enclosure while still in use in conjunction with wearable device 200 and the head mounted display apparatus 400.

In the embodiment of FIG. 1D the wearable device 200 is equipped with the touchscreen 230 and the motion sensor 208. A user can wirelessly control the position of the cursor 191 on the terminal device 100 by operation of the touchscreen 230 or through movement by the user while wearing the wearable device 200. Further, terminal device 100 communicates wirelessly with a projector 500, which displays an expanded view of the image produced by or shown on the display of terminal device 100.Thus, the wearable device 200 can be used to control the position of the cursor 191 and switch between functions, such as display modes, which may be shown on the screen of the terminal device 100, as well as control the cursor 691 shown on projected image 600 of the projector 500.

Referring back to FIG. 1A, the projector 500 can be substituted for the terminal device 100, enabling the wearable device 200 to communicate directly with, and control the data input to, the projector 500. Thus, the projected image 600 and cursor image 691 by the projector 500 is directly controlled by data input of the wearable device 200.

Further, in FIG. 1B the terminal device 100 or monitor 300 could also be a projector 500, for example. If the functionality of the terminal device 100 is incorporated in the projector 500 then wearable device 200 is able to control the functions of the projector 500 by direct communication.

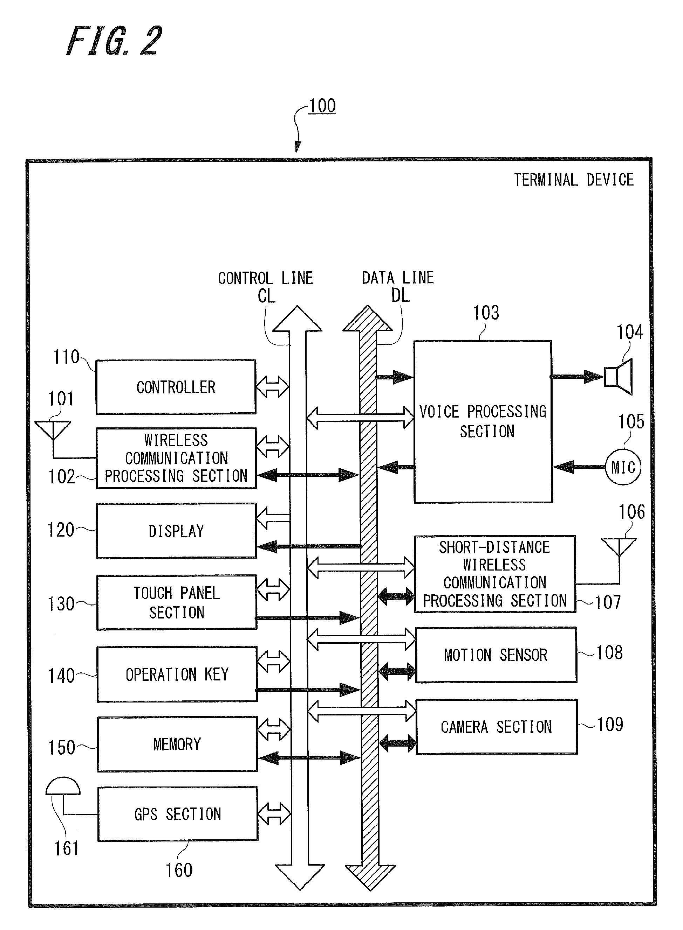

FIG. 2 shows a structural example of the terminal device 100 comprising a smart phone. The terminal device 100 has an antenna 101 and a wireless communication processing module 102. The wireless communication processing module 102 is a communication processing part for cellular communication, and performs as the base station and wireless communications for radio telephones. A voice signal received by the wireless communication processing module 102 is supplied to a voice processing module 103. A speaker 104 outputs the voice signal. The voice signal is supplied to a speech-processing module 103 from a microphone 105. The voice signal is supplied to the wireless communication processing module 102 from the speech-processing part 103. In addition, when the terminal device 100 is a tablet-type terminal device, the wireless communication processing module 102 is not necessarily required. In addition, the terminal device 100 is equipped with a short-distance wireless communication process module 107. The short-distance wireless communication process module 107 is a communication processing part which performs wireless communications by, for example, the IEEE 802.11 standard using a frequency of 2.4 GHz. An antenna 106 is connected to the short-distance wireless communication process module 107. In addition, the short-distance wireless communication process module 107 is also equipped with the capability to perform NFC using a Bluetooth protocol. The motion sensor 108, equipped with an acceleration sensor which detects acceleration, and a gyro sensor which detects angular velocity, detects motion of the wearable device 100. A camera 109 takes images of the surroundings of the terminal device 100. The display 120 is equipped with the display panel comprising a liquid crystal display panel or an organic electroluminescence display panel, and is arranged inside the terminal device 100. Contents, such as a character and an image, are shown on the display 120. For example, when the Internet is accessed, text content transmitted from a Web server or an image is shown on the display panel. In addition, text and image data are stored by memory 150. Furthermore, images taken by the camera 109 are shown on the display panel. The touchscreen 130 is equipped with the touch sensor which detects the touch of the surface of the display panel. The touchscreen 130 is arranged integrally with the display panel with which the display 120 is equipped. The touchscreen 130 detects the touch of a user's finger, and the touch of a pen. The data which the touchscreen 130 detects are transmitted to a terminal controller 110. The terminal controller 110 controls each part of the terminal device 100 based on the data detected by the touchscreen 130 or an operation key 140. The programs and other operations which the terminal controller 110 executes are stored by memory 150. A Global Positioning System (GPS) antenna 161 is connected to a GPS module 160. The GPS module 160 receives the GPS satellite signal, and detects the present position of the terminal device 100. The information of the present position which the GPS module 160 detects is transmitted to the terminal controller 110. The terminal device 100 is equipped with a control line CL and a data line DL as an internal bus. The control data from the terminal controller 110 are transmitted through the control line CL. The data line DL is used for transmission of voice data, display data, and so forth.

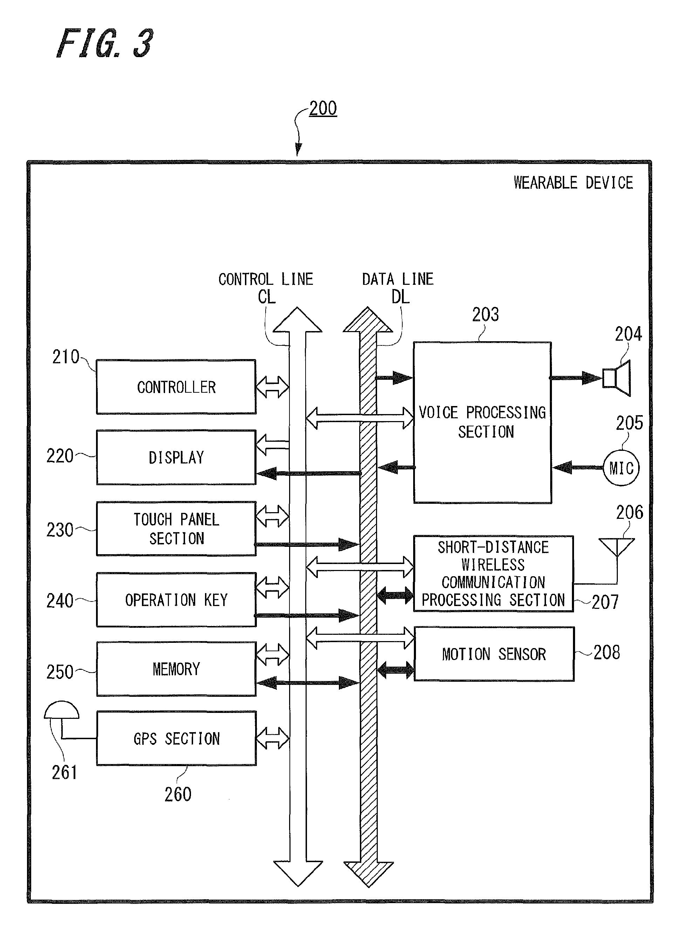

FIG. 3 shows a structural example of the wearable device 200, comprising a smart watch. The wearable device 200 is equipped with a voice processing module 203. A speaker 204, through which voice output is performed, is connected to a voice processing module 203. In addition, the voice signal acquired with by a microphone 205 is supplied to the voice processing module 203. In addition, the wearable device 200 is equipped with a short-distance wireless communication processing module 207. The short-distance wireless communication processing module 207 performs wireless communications by the IEEE 802.11 standard. The short-distance wireless communication processing module 207 communicates wirelessly using the IEEE 802.11 standard at a frequency of, for example 2.4 GHz and/or 5 GHz. An antenna 206 is connected to the short-distance wireless communication processing module 207. In addition, the short-distance wireless communication processing module 207 is also equipped with the ability to perform Near Field Communication (NFC) using a Bluetooth protocol. The motion sensor 208, equipped with an acceleration sensor which detects acceleration, and a gyro sensor which detects angular velocity, detects motion of the wearable device 200. The display 220 is equipped with the display panel. The display panel comprising a liquid crystal display panel or an organic electroluminescence display panel, is arranged inside the wearable device 200. Information, such as a character and an image, is shown on the display 220. The touchscreen 230 is equipped with a touch sensor which detects the touch of the surface of the display panel. The touchscreen 230 is arranged integrally with the display panel with which the display 220 is equipped. The touchscreen 230 detects the touch of a user's finger, and the touch of a pen or stylus. The data which the touchscreen 230 detects are transmitted to the wearable controller 210. The wearable controller 210 controls each part of the wearable device 200 based on the data detected by the touchscreen 230 or the operation key 240. In addition, data detected by the touchscreen 230 or the operation key 240 is wirelessly transmitted to the terminal device 100 from the short-distance wireless communication processing module 207 under control of the wearable controller 210. Also, the short-distance wireless communication processing module 207 under control of the wearable controller 210 wirelessly transmits data detected by the motion sensor 208 to the terminal device 100. The programs and functions which the wearable controller 210 runs are stored by memory 250. A GPS antenna 261 is connected to a GPS module 260. The GPS module 260 receives the satellite signal of GPS (Global Positioning System), and detects the present position of the wearable device 200. The information of the present position which the GPS module 260 detects is transmitted to the wearable controller 210. The wearable device 200 is equipped with a control line CL and a data line DL as an internal bus line. The control data from the wearable controller 210 are transmitted through the control line CL. The data line DL is used for transmission of voice data, display data, and so forth.

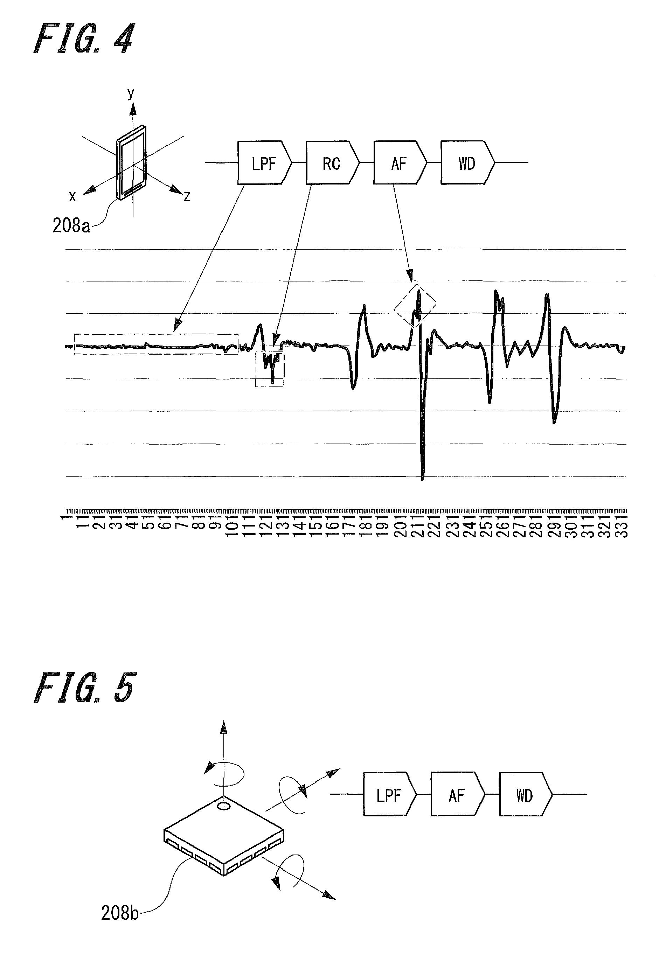

FIG. 4 shows an example embodiment of the motion sensor 208 equipped with an acceleration sensor 208a. The acceleration sensor 208a detects the resultant acceleration of three axes X, Y, and Z. The acceleration sensor 208a output data is processed through a Low-Pass Filter (LPF) to reduce a high frequency noise component. In addition, output data of the acceleration sensor 208a is processed by a Rebound Canceller (RC) that filters a rebound component. In addition, output data of the acceleration sensor 208a is equalized by an Averaging Filter (AF). Furthermore, a weighted average of the output data of the acceleration sensor 208a is produced by a weighting processing part (WD). The waveform depicted in FIG. 4 is an example of the output data produced by the acceleration sensor 208a, and which is processed by a low-pass filter, a rebound canceller, an averaging filter, and a weighting processing part.

FIG. 5 shows an example embodiment of the motion sensor 208 equipped with a gyro sensor 208b. The gyro sensor 208b detects the resultant angular velocity of three axes represented as roll, pitch, and yaw. The gyro sensor 208b output data is processed through a Low-Pass Filter (LPF) to reduce a high frequency noise component. In addition, output data of the gyro sensor 208b is equalized by an Averaging Filter (AF). Furthermore, a weighted average of the output data of the gyro sensor 208b is produced by a weighting processing part (WD).

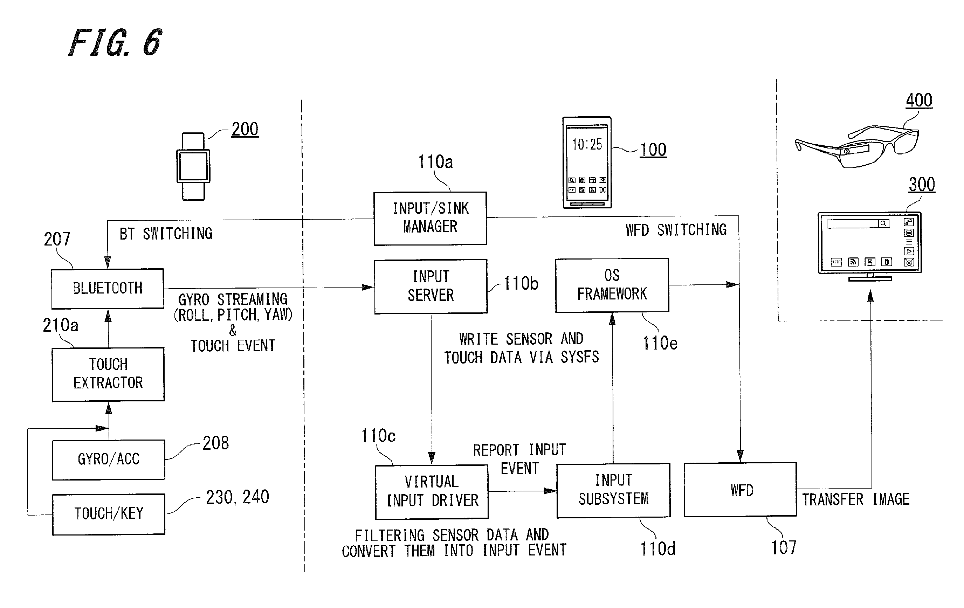

FIG. 6 shows an example of data transmitted between the wearable device 200 and the terminal device 100. At the wearable device 200, the motion sensor 208 detects and outputs angular velocity (roll, pitch, yaw), while the touchscreen 230 detects and outputs touch data. Data from both the motion sensor 208 and the touchscreen 230 are sent to the touch extractor 210a of the wearable controller 210. Angular velocity data are extracted by the wearable controller 210 and transmitted to the terminal device 100 by Bluetooth from a short-distance wireless communication processing module 207. In the terminal device 100, touch and angular velocity data are received by an input server 110b in the terminal controller 110 from the short-distance wireless communication processing module 207. A virtual input driver 110c filters and converts the data into an input event. Data of the input event are reported to an Operating System (OS) framework 110e by way of an input subsystem 110d in the terminal controller 110. A process corresponding to an input event is performed in the OS framework 110e. For example, based on an input event, the display position of the cursor 191 (FIG. 1) shown on the display 120 of the terminal device 100 changes. In addition, data generated based on touch is generated in the touch extractor 210a of the wearable device 200 and used to switch the display mode and the display terminals 100. This data (BT switching) that switches the display mode and the display terminal is transmitted to the terminal device 100 from the short-distance wireless communication processing module 207. In the terminal device 100, the data which switch the display mode are discriminated by an input/sink manager 110a of the terminal controller 110, and the terminal controller 110 changes the display mode of the display 120 of the terminal device 100. In addition, a short-distance wireless communication process module 107 of the terminal device 100 performs wireless communications with a monitor apparatus 300 or a head mounted display 400. This wireless communication is performed by way of a Wi-Fi direct (WFD) communication protocol. The image shown on the display 120 of the terminal device 100 is also transmitted to and shown on the monitor apparatus 300 or the head mounted display 400. Therefore, the position of the cursor shown on the monitor apparatus 300 or the head mounted display 400 changes in response to the position of the cursor 191 shown on the display 120 of the terminal device 100. Furthermore, the data which switch the display mode or display terminal of the monitor apparatus 300 or the head mounted display 400 are transmitted to the monitor apparatus 300 or the head mounted display 400 from the short-distance wireless communication process module 107. The display mode of the monitor apparatus 300 or the head mounted display 400 is controlled by the data which switch this display mode. In addition, in the case of the data which switch the display terminal, the display terminal (the monitor apparatus 300 and the head mounted display 400) to which the short-distance wireless communication process module 107 transmits image data is switched.

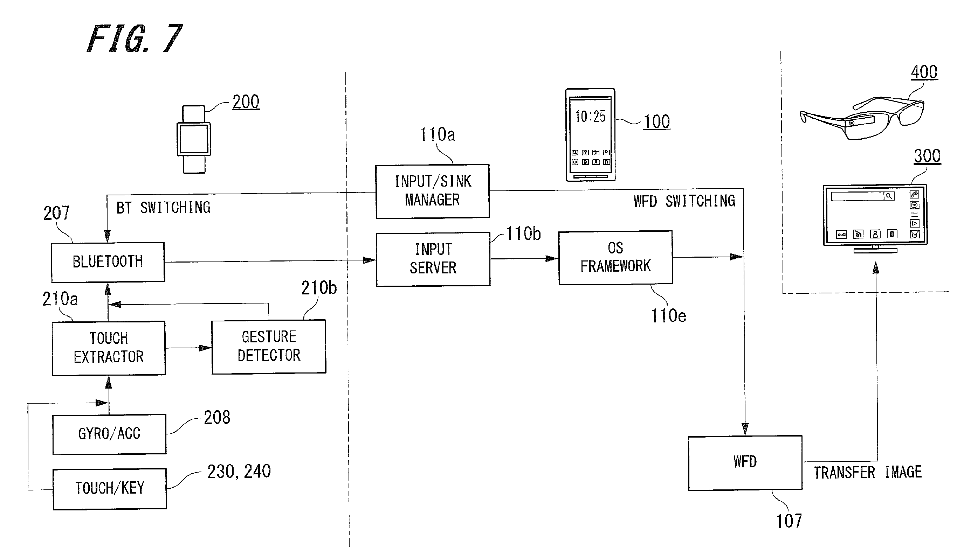

FIG. 7 shows the example of data transmitted between the wearable device 200 and the terminal device 100. At the wearable device 200, the motion sensor 208 detects and outputs angular velocity (roll, pitch, yaw), while the touchscreen 230 detects and outputs touch data. Data from both the motion sensor 208 and the touchscreen 230 are sent to the touch extractor 210a of the wearable controller 210. Data detected by and extracted from the motion sensor 208 and touchscreen 230 are supplied to a gesture detection part 210b, and the gesture corresponding to a motion is determined. Gesture data determined by the gesture detection part 210b are transmitted to the terminal device 100 by Bluetooth from a short-distance wireless communication processing module 207. In the terminal device 100, the data of a received gesture are supplied to an input server 110b in the terminal controller 110. The data of the gesture received by an input server 110b are supplied to an OS (Operating System) framework 110e. The process corresponding to the gesture is performed in the OS framework 110e. For example, the display mode of the display 120 of the terminal device 100 is controlled based on gesture. Furthermore, the data (WFD switching) which switch the display mode or display terminal of a monitor apparatus 300 or a head mounted display 400 are transmitted to the monitor apparatus 300 or the head mounted display 400 from a short-distance wireless communication process module 107. The display mode of the monitor apparatus 300 or the head mounted display 400 is controlled by the data which switch this display mode. In addition, in the case of data which switch the display terminal, the display terminal (the monitor apparatus 300 and the head mounted display 400) to which the short-distance wireless communication process module 107 transmits image data is switched.

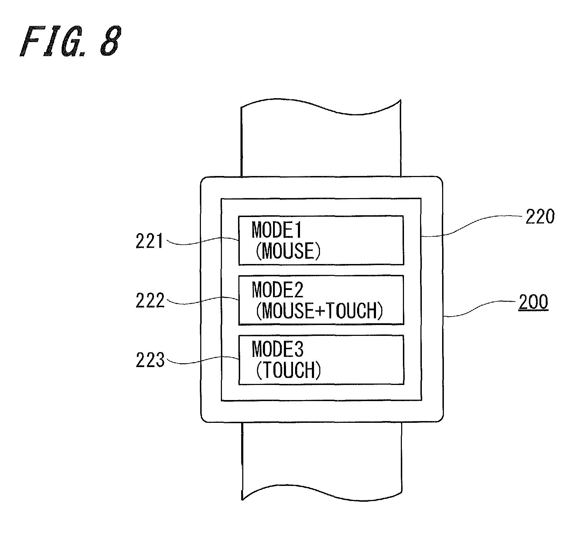

FIG. 8 is an example embodiment of the display 220 of the wearable device 200 showing a screen from which a user can select from a plurality of operational modes of the wearable device 200. Model is a mode which operates the cursor 191 based on the data which the motion sensor 208 detected. Mode2 is a mode which operates the cursor 191 and also directs the display mode by touch operation based on the data which the motion sensor 208 detected and by touch operation via the touchscreen 230 of the wearable device 200. Mode3 is a mode in which the display mode is directed by touch operation with the touchscreen 230 of the wearable device 200. A user touches either of buttons 221, 222, 223 of the display 220, and the wearable device 200 is activated in the mode of the button directed by the touch.

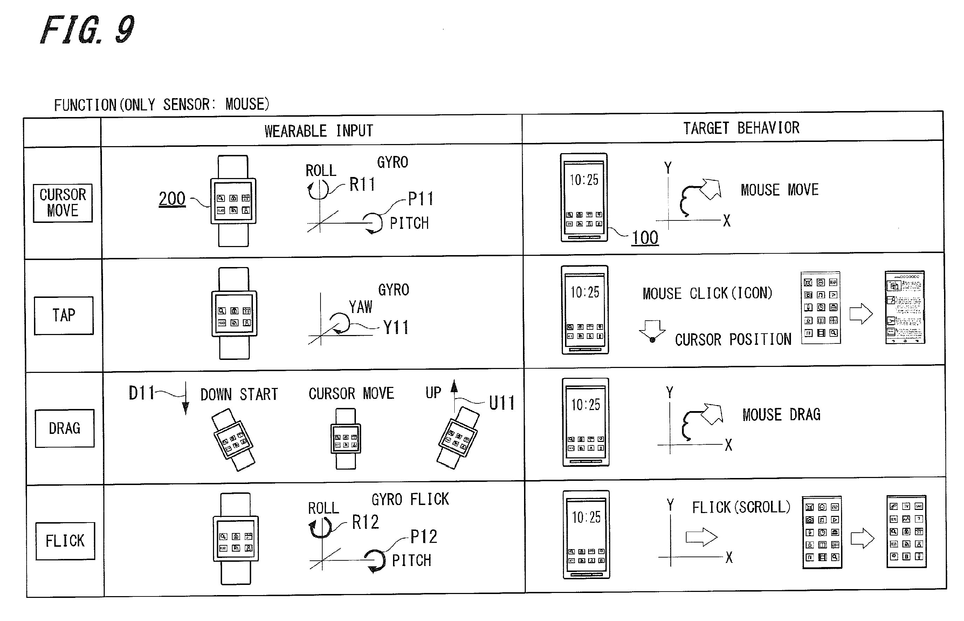

Figures 9 through 15 depict embodiments of wearable devices 200 equipped with the motion sensor 208 as described in Fig. 4.

In the embodiment of FIG. 9 the wearable device 200 is equipped with the motion sensor 208. A user can control the position and other actions of the cursor 191 on the terminal device 100 through movement while wearing the wearable device 200. Such actions of cursor 191 include movement of the cursor, tapping and dragging, and flicking. In a case that the motion sensor 208 detects movement by the user, of pitch angular velocity P11 and roll angular velocity R11, the cursor shown on the display 120 of the terminal device 100 moves. That is, the cursor moves in the horizontal X direction of the display 120 corresponding to angular velocity P11 of pitch, and moves in the vertical Y direction corresponding to angular velocity R11 of roll. In a case that the motion sensor 208 detects movement by the user, of yaw angular velocity Y11, the cursor 191 shown on the display 120 of the terminal device 100 performs accordingly. At that time, a tapping or dragging action is performed because the user performs the upward motion U11 of the arm at a quick speed, or the downward motion D11 of the arm at a quick speed. Tapping results in the selection of an icon located where the cursor 191 is displayed. Dragging results in movement of an icon selected with the cursor 191. In a case that the motion sensor 208 detects movement by the user, of pitch angular velocity P12 and roll angular velocity R12, a corresponding flicking movement is performed in the terminal device 100 which results in directional scrolling of the display 120 of the terminal device 100. Angular velocities P12 and R12 are of greater magnitude than P11 and R11. Therefore in a case that the user moves quickly, scrolling of the display 120 occurs, while the cursor 191 movement on the display 120 results in a case that the user moves less quickly. Thus, through the user's movement, the wearable device 200 can be used to control the position and other actions of the cursor 191, and to switch between functions, such as display modes, which may be shown on the screen of the terminal device 100.

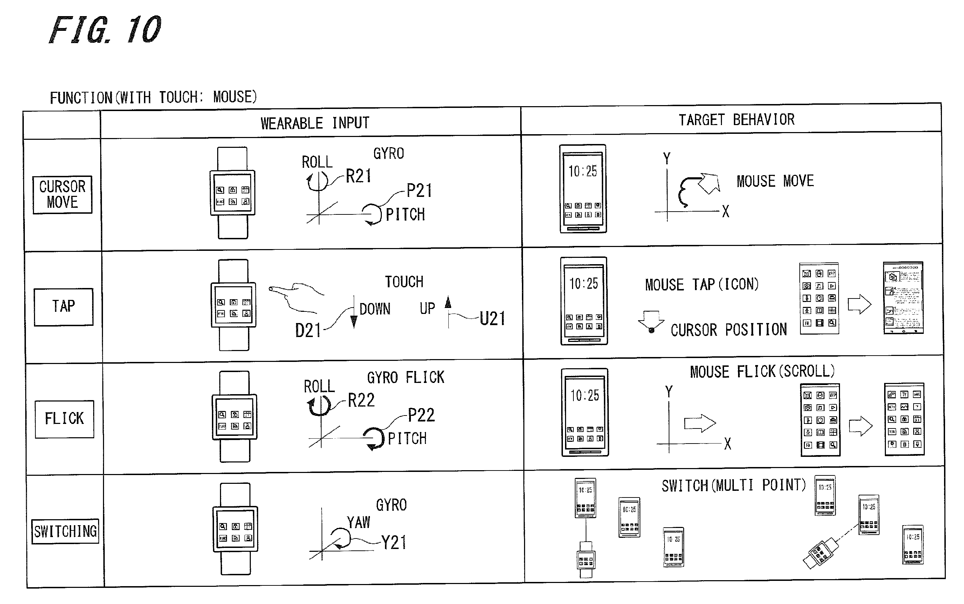

In the embodiment of FIG. 10 the wearable device 200 is equipped with the motion sensor 208 and the touchscreen 230. A user can control the position and other actions of the cursor 191 on the terminal device 100 with movement while wearing the wearable device 200 or by touching the touchscreen 230 on the same device. Such actions include movement of the cursor, tapping, flicking, and switching among a plurality of terminal devices 100. In a case that the motion sensor 208 detects pitch angular velocity P21 and roll angular velocity R21 by the user's movement, the cursor shown on the display 120 of the terminal device 100 moves. That is, the cursor moves in the horizontal X direction of the display 120 corresponding to angular velocity P21 of pitch, and moves in the vertical Y direction corresponding to angular velocity R21 of roll. In a case that the touchscreen 230 detects the start of a touch D21 and the end of a touch U21, tapping of the cursor shown on the display 120 of the terminal device 100 occurs. Tapping results in the selection of an icon located where the cursor 191 is displayed. In a case that the motion sensor 208 detects movement by the user, of pitch angular velocity P22 and roll angular velocity R22, a corresponding flicking movement is performed in the terminal device 100 which results in directional scrolling of the display 120. Angular velocities P22 and R22 are of greater magnitude than P21 and R21. Therefore in a case that the user moves an arm quickly, scrolling of the display 120 occurs, while cursor 191 movement on the display 120 results in a case that the user moves less quickly. In a case that the motion sensor 208 detects movement of the user, of yaw angular velocity Y21, the wearable device 200 which communicates wirelessly with the terminal device 100 switches to communicating wirelessly with another terminal device 100. For example, there are three units of terminal devices 100 arranged side-by-side. In a case that a user directs the wearable device 200 toward another terminal device 100, the terminal device 100 with which the wearable device 200 communicates wirelessly switches to the adjoining terminal device 100. Thus, the wearable device 200 can be used to control the position and other actions of the display 120, the cursor 191, switch between functions, such as display modes, which may be shown on the screen of the terminal device 100, and switch between a plurality of terminal devices 100 based on movement by the user.

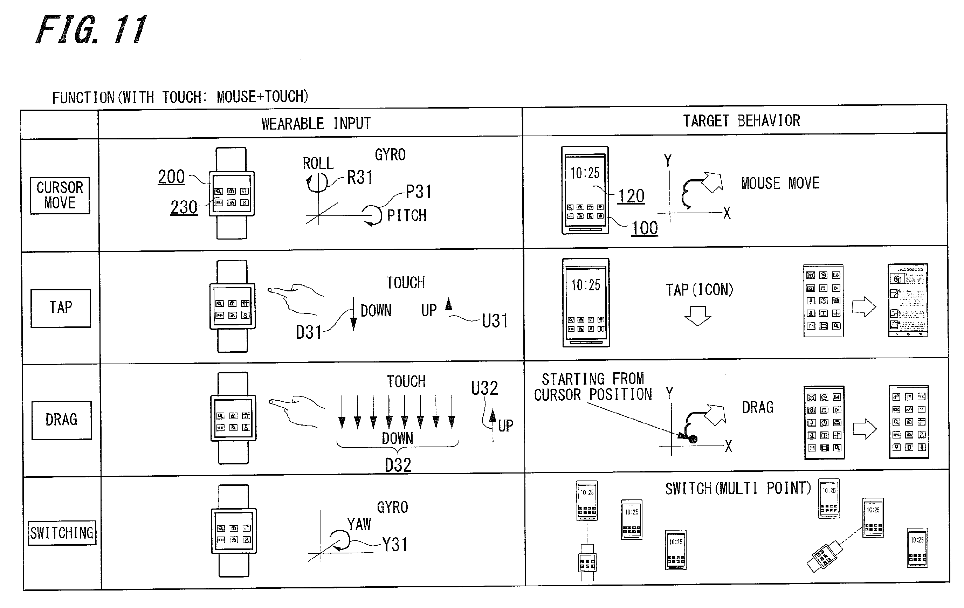

In the embodiment of FIG. 11 the wearable device 200 is equipped with the motion sensor 208 and the touchscreen 230. A user can control the position and other actions of the cursor 191 on the terminal device 100 with movement while wearing the wearable device 200 or by touching the touchscreen 230 of the same device. Such actions include movement of the cursor, tapping, dragging, and switching among different terminal devices 100. In a case that the motion sensor 208 detects movement by the user, of pitch angular velocity P31 and roll angular velocity R31, the cursor shown on the display 120 of the terminal device 100 moves. That is, the cursor moves in the horizontal X direction of the display 120 corresponding to angular velocity P31 of pitch, and moves in the vertical Y direction corresponding to angular velocity R31 of roll. In a case that the touchscreen 230 detects the start of a touch D31 and the end of a touch U31, tapping of the cursor 191 shown on the display 120 of the terminal device 100 occurs. Tapping results in the selection of an icon located where the cursor 191 is displayed. In a case that the touchscreen 230 detects the continuous touch D32 and the end of a touch U32, dragging of the cursor 191 shown on the display 120 of the terminal device 100 occurs. In a case that the motion sensor 208 detects movement by the user, of yaw angular velocity Y31, the terminal device 100 with which the wearable device 200 communicates wirelessly switches to another terminal device 100. Thus, the wearable device 200 can be used to control the position and other actions of the display 120, the cursor 191, switch between functions, such as display modes, which may be shown on the screen of the terminal device 100, and switch between a plurality of terminal devices 100 through movement by the user.

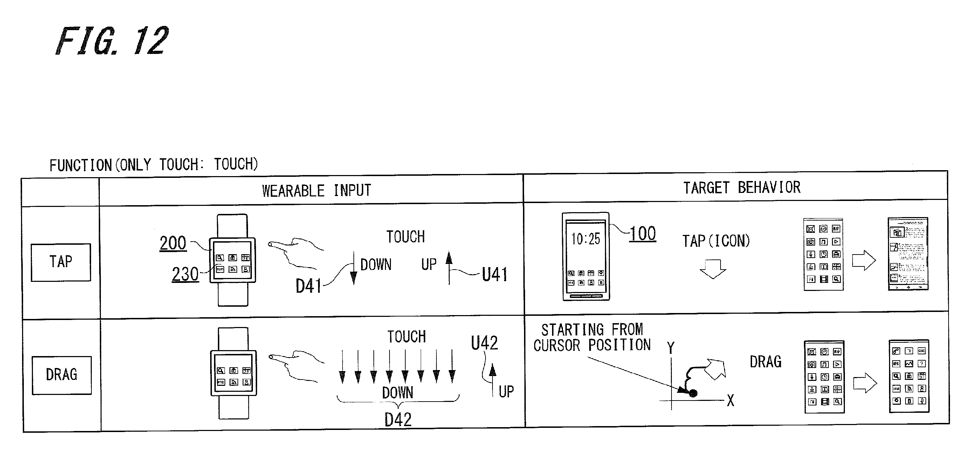

In the embodiment of FIG. 12 the wearable device 200 is equipped with the touchscreen 230. A user can control certain actions on the terminal device 100 by touching the touchscreen 230 on the wearable device 200. Such actions include tapping and dragging. In a case that the touchscreen 230 detects the start of a touch D41 and the end of a touch U41, tapping of the cursor shown on the display 120 of the terminal device 100 occurs. In a case that the touchscreen 230 detects the continuous touch D42 and the end of touch U42, dragging of the cursor shown on the display 120 of the terminal device 100 occurs.

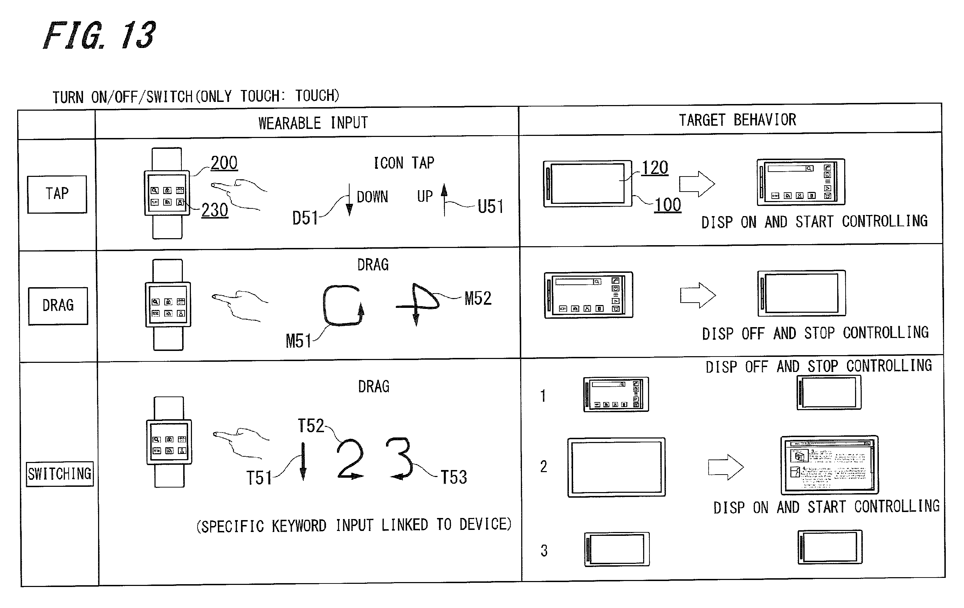

In the embodiment of FIG. 13 the wearable device 200 is equipped with the touchscreen 230. A user can control certain actions on the terminal device 100 by touching the touchscreen 230 on the wearable device 200. Such actions include tapping, dragging, and switching among a plurality of terminal devices 100. In a case that the touchscreen 230 detects the start of a touch on a predetermined icon D51 and the end of touch U51, the display 120 of the terminal device 100 is set to ON, and control of the display 120 by the wearable device 200 begins. In a case that the touchscreen 230 detects a continuous motion M51 or M52 dragging of the cursor 191 shown on the display 120, control of the display 120 on the terminal device 100 by the wearable device 200 ends, and the display 120 is set to OFF. In a case that the touchscreen 230 detects touch T51, T52 or T53 in the shape of a predetermined gesture such as a character, number or symbol, the terminal device 100 with which the wearable device 200 communicates wirelessly is changed to another terminal device 100. For example, there are three units of terminal devices 100. In a case that the touchscreen 230 detects touch T51 of number "1", the wearable device 200 sets the destination of wireless communications as the first terminal device 100 shown in Fig. 13. In addition, in a case that the touchscreen 230 detects touch T52 of number "2", the wearable device 200 sets the destination of wireless communications as the second terminal device 100 shown in Fig. 13. In addition, in a case that the touchscreen 230 detects touch T53 of number "3", the wearable device 200 sets the destination of wireless communications as the third terminal device 100 shown in Fig. 13. In addition, any terminal device 100 which is not the destination of wireless communications with wearable device 200 stops showing the display of wearable device 200.

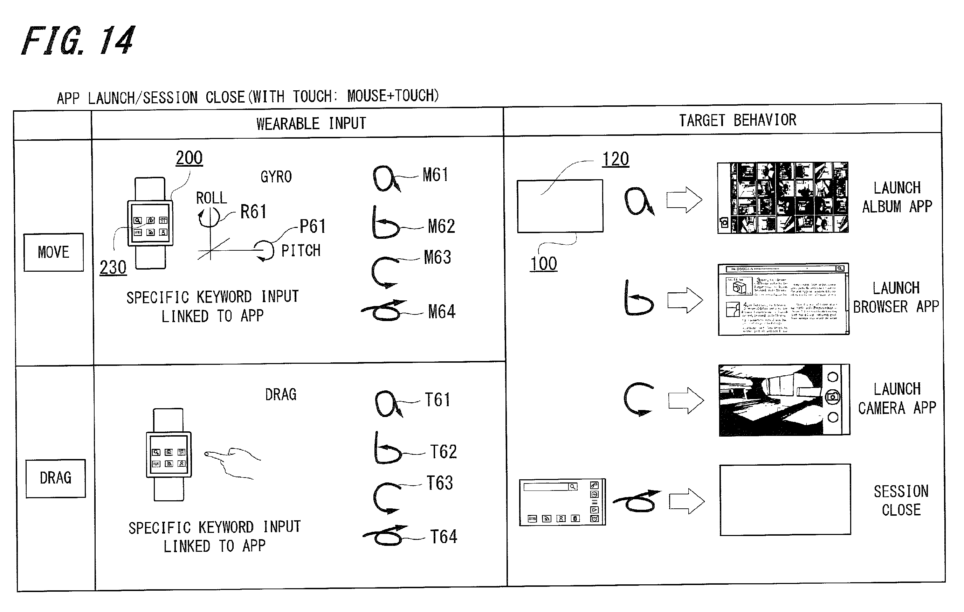

In the embodiment of FIG. 14 the wearable device 200 is equipped with the motion sensor 208 and the touchscreen 230. A user can launch applications on the terminal device 100 by movement while wearing the wearable device 200 or by touching the touchscreen 230 of the same device. The motion sensor 208 detects movement by the user, of angular velocity P61 of pitch and angular velocity R61 of roll. In a case that the wearable device 200 detects a motion of predetermined gesture (a character, a number, or a symbol) M61, M62, M63, or M64, the terminal device 100 performs the action allocated to each motion M61, M62, M63, and M64. For example, in a case that the motion sensor 208 detects motion M61, the terminal device 100 starts the application on which the display 120 is made to show an album image. In addition, in a case that the motion sensor 208 detects motion M62, the terminal device 100 starts the application of a browser. At this time, the image of an Internet browser is shown on the display 120. In addition, in a case that the motion sensor 208 detects motion M63, the terminal device 100 starts the application of a camera. At this time, the image which a camera 109 took is shown on the display 120. In addition, in a case that the motion sensor 208 detects motion M64, the terminal device 100 performs action which ends the application and stops displaying it on the display 120. In a case that the touchscreen 230 detects a touch of predetermined gesture (a character, a number, or a symbol) T61, T62, T63, T64, the terminal device 100 performs the action allocated to each touch T61, T62, T63, and T64. For example, in a case that the touchscreen 230 detects touch T61, the terminal device 100 starts the application on which the display 120 is made to show an album image. In addition, in a case that the touchscreen 230 detects touch T62, the terminal device 100 starts the application of a browser. At this time, the image of an Internet browser is shown on the display 120. In addition, in a case that the touchscreen 230 detects touch T63, the terminal device 100 starts the application of a camera. At this time, the image which the camera 109 took is shown on the display 120. In addition, in a case that the touchscreen 230 detects touch T64, the terminal device 100 performs action which ends the application and stops displaying it on the display 120.

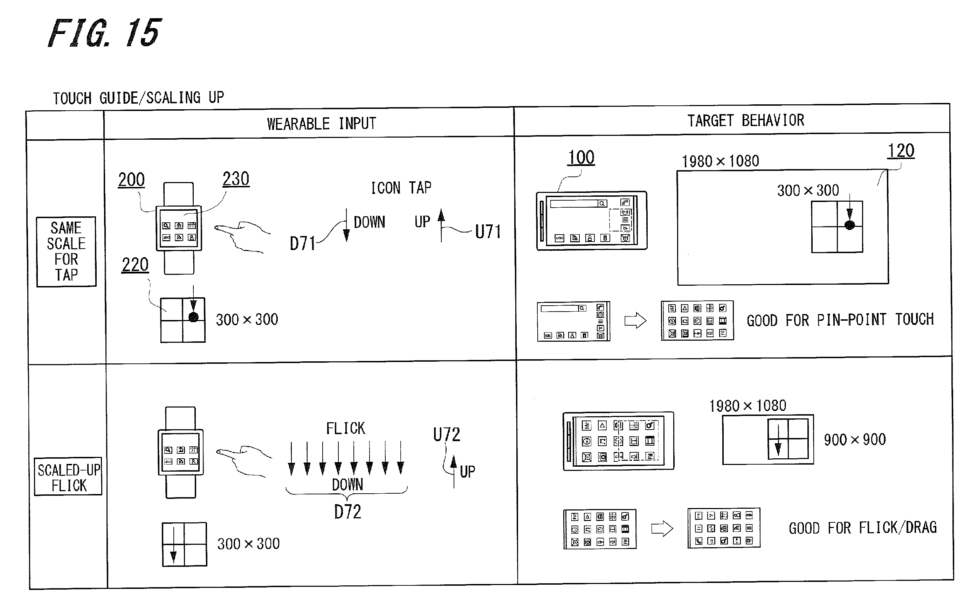

In the embodiment of FIG. 15 the display 220 comprising 300 pixels by 300 pixels, of the wearable device 200 displays a touch operation of the wearable device 200. The terminal device 100 communicates wirelessly with the wearable device 200 to carry out the touch operation on the display 120, comprising 1980 pixels by 1080 pixels, that emulates the touch operation on the touchscreen 230 of the wearable device 200. In a case that the touchscreen 230 of the wearable device 200 detects the start of touch D71 at a specific location, and the end of touch U71, the coordinate position within the 300 pixel by 300 pixel display 220 of where it was touched is transmitted to the terminal device 100. Then, while in this mode of operation, within the 1980 pixel by 1080 pixel display 120 of the terminal device 100, a corresponding area of 300 pixels by 300 pixels is allocated to reflect the relative coordinate position and movement received from the wearable device 200. For example, the display function of the terminal device 100 is changed by touch operation of the wearable device 200. Thereby the touchscreen 230 of the wearable device 200 is used and controlled by the same state at the same time as the display 120 of terminal device 100. Therefore, by using the touchscreen 230 of the wearable device 200, a user can perform the same operation as touching terminal device 100, but without touching the terminal device 100. In this example, the display 120 of the terminal device 100 is equipped with the panel which is 1980 pixels x 1080 pixels, and the display 220 of the wearable device 200 is equipped with the panel which is 300 pixels by 300 pixels. In a case that the touchscreen 230 of the wearable device 200 detects the continuous touch D72 in a specific location, and flicking by the end of the touch U72, the corresponding coordinate area in the display 120 of the terminal device 100 is scaled-up (enlarged). For example, the touch operation on the display 220 (300 pixels by 300 pixels) of the wearable device 200 is shown in operation of the area (900 pixels by 900 pixels) of the display 120 of the terminal device 100. Thus, a touch operation of the user using the wearable device 200 is reflected in operation of an area of arbitrary size of the display 120 of the terminal device 100.

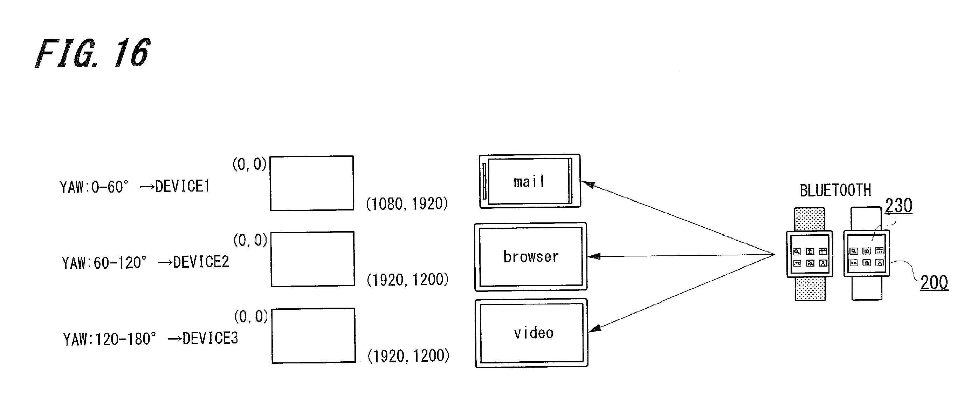

In the embodiment of FIG. 16, which shows in detail the action of FIG. 10 of switching between various terminal devices 100, the wearable device 200 is used to select between three examples of terminal device 100 by using motion sensor 208 to detect the position of the wearable device 200 about its yaw axis. For example, in a case that the motion sensor 208 detects the yaw position of the wearable device 200 is in the range of zero to 60 degrees, the wearable device 200 chooses the terminal device 100 labeled Device 1 as the communication destination. Thus if the user of wearable device 200 then selects an email application with the touchscreen 230 of the wearable device 200, the terminal device 100 labeled Device 1 performs that email operation. In addition, in a case that the motion sensor 208 detects the yaw position of the wearable device 200 is in the range of 60 to 120 degrees, the wearable device 200 chooses the terminal device 100 labeled Device 2 as the communication destination. Thus if the user of wearable device 200 then selects a web browser application with touchscreen 230 of the wearable device 200, the terminal device 100 labeled Device 2 performs that web browser operation. In addition, in a case that the motion sensor 208 detects the yaw position of the wearable device 200 is in the range of 120 to 180 degrees, the wearable device 200 chooses the terminal device 100 labeled Device 3 as the communication destination. Thus if the user of wearable device 200 then selects an application for viewing and listening to a moving image with touchscreen 230 of the wearable device 200, the terminal device 100 labeled Device 3 performs that operation.

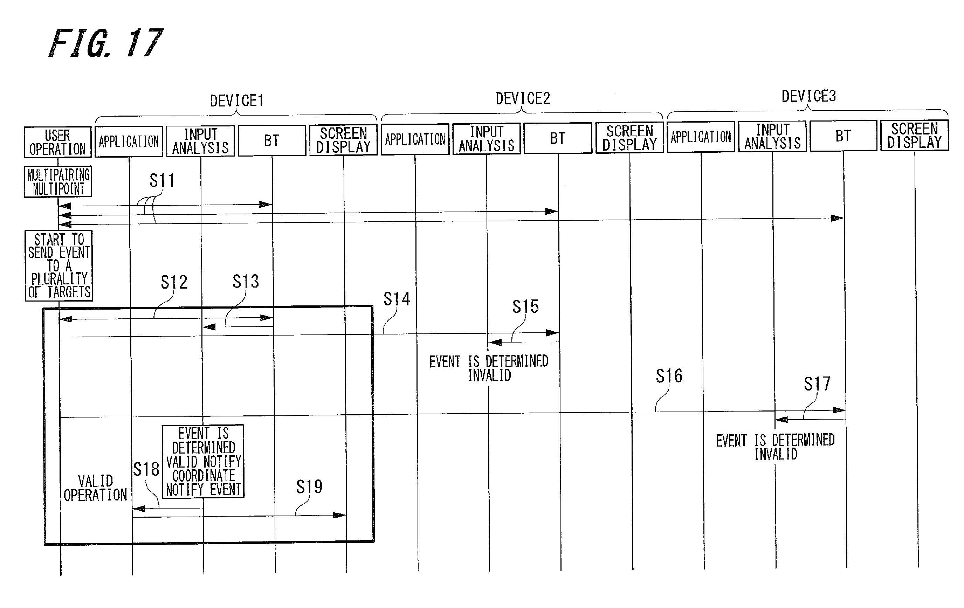

The embodiment of FIG. 17 shows steps by which a plurality of terminal devices 100 communicate with one wearable device 200 (shown in Fig. 16).
Step S11: Communication between the wearable device 200 and, in this case, three terminal devices 100 labeled Device 1, Device 2, and Device 3 is initiated through multi-pairing by a user operation such as touching the touchscreen 230 or by movement while wearing the wearable device 200.
Step S12: The wearable device 200 carries out the wireless transmission of the event data to terminal device 100 Device 1.
Step S 13: Terminal device 100 Device 1 sends the data of the received event to an input analysis part.
Step S14: The wearable device 200 carries out the wireless transmission of the event data to terminal device 100 Device 2.
Step S 15: Terminal device 100 Device 2 sends the data of the received event to an input analysis part. It is judged in an input analysis part that the received event data is invalid.
Step S16: The wearable device 200 carries out the wireless transmission of the event data to terminal device 100 Device 3.
Step S 17: Terminal device 100 Device 3 sends the data of the received event to an input analysis part. It is judged in an input analysis part that the received event data is invalid.
Step S18: The input analysis part of terminal device 100 Device 1 judges the event data is valid and notifies wearable device 200 of execution of an event to the application program corresponding to the judged event.
Step S19: The application program changes the display based on the directed event in terminal device 100 Device 1.

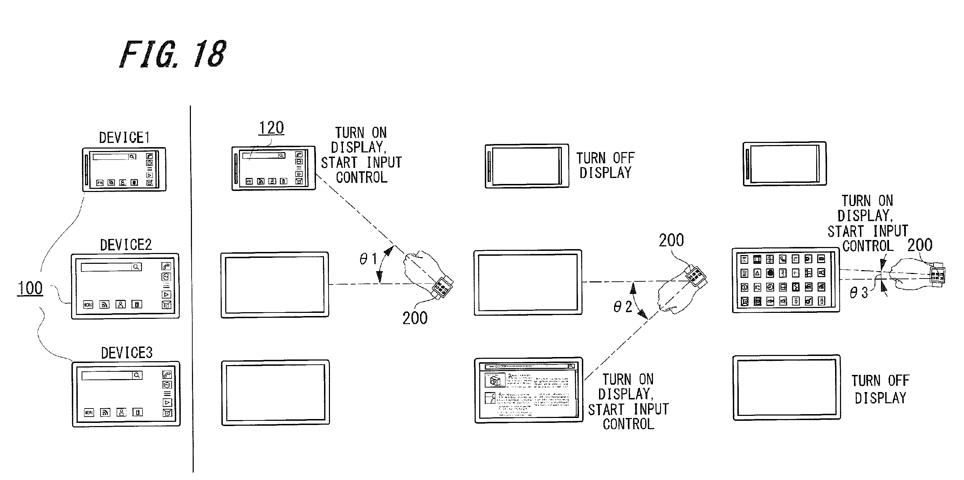

The embodiment of FIG. 18 shows an example in which the wearable device 200 switches communication between three terminal devices 100, and how the conditions under which switching can occur. For example, a user wearing the wearable device 200 inclines his arm by angle (theta) 1. In this state, in a case that the touchscreen 230 of the first terminal device 100 Device 1 detects a touch operation of double-clicking at the wearable device 200, the relationship between angle (theta) 1 and the terminal device 100 labeled Device 1 is registered. In addition, the user wearing the wearable device 200 inclines his arm only by angle (theta) 2. In this state, in a case that the touchscreen 230 of the third terminal device 100 Device 3 detects a touch operation of double-clicking at the wearable device 200, the relationship between angle (theta) 2 and the terminal device 100 labeled Device 3 is registered. In addition, the user wearing the wearable device 200 inclines his arm only by angle (theta) 3. In this state, in a case that the touchscreen 230 of the third terminal device 100 Device 2 detects a touch operation of double-clicking at the wearable device 200, the relationship between angle (theta) 3 and the terminal device 100 labeled Device 2 is registered. In addition, each terminal device 100 turns on the display 120 in a case that it is selected. In addition, the terminal devices 100 not selected each turns off the display 120. In addition, after the relationship between each of the terminal devices 100 and the wearable device 200 is registered based on the angles (theta) 1, (theta) 2, and (theta) 3, respectively, in a case that wearable device 200 moves through those corresponding angles, it communicates with the same terminal devices 100 for the same given angles as initially registered.

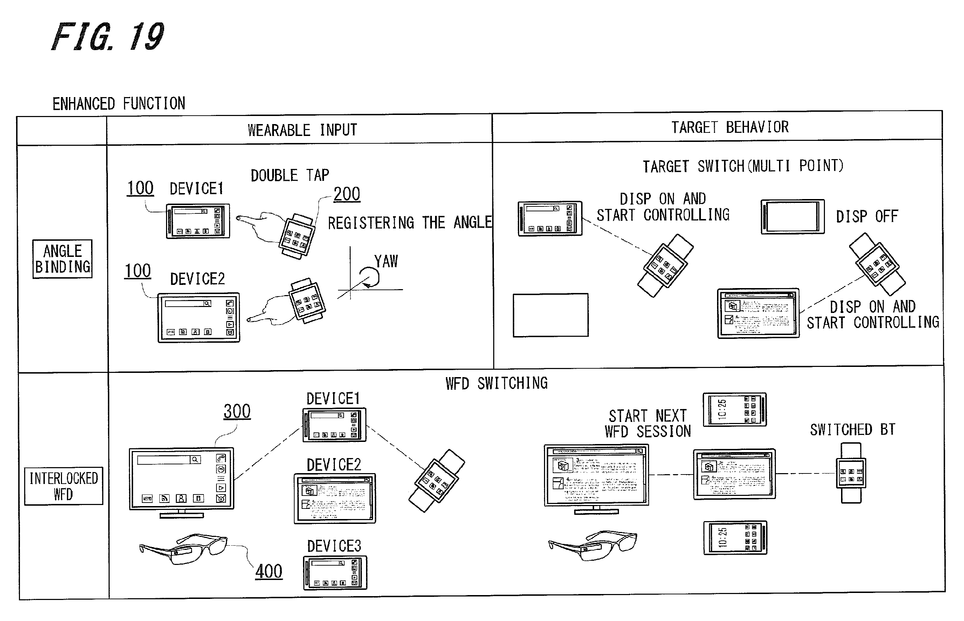

The embodiment of FIG. 19 shows an example in which the wearable device 200 switches communication between two terminal devices 100 and the resulting display of a monitor apparatus 300 with which the terminal device 100 is communicating wirelessly. For example, the yaw angle detected at the wearable device 200 is registered as an angle which selects the terminal device 100 labeled Device 1 after double-clicking the touchscreen. In a case that the wearable device 200 switches the terminal device 100 with which it communicates wirelessly, the monitor apparatus 300 will switch to communicating with whichever terminal device 100 the wearable device 200 is communicating with.

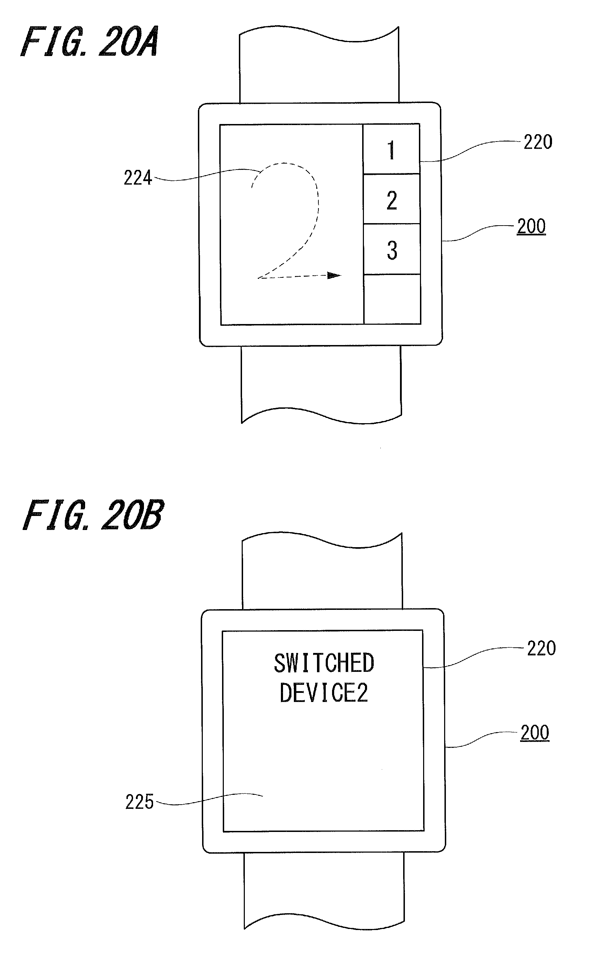

FIGS. 20A and 20B show an embodiment of the function in which the wearable device 200 switches communication between two terminal devices 100 based on a user's touch on the touchscreen 230 of the wearable device 200. In the example of FIG. 20A the touchscreen 230 of the display 220 of the wearable device 200 detects a touch operation 224 describing the shape of the number "2". Once detected, the wearable device 200 switches to communicating with terminal device 100 labeled Device 2 described in Fig. 19. On the display 220 of the wearable device 200, image 225 is shown displaying a message that the wearable device 200 has switched to the terminal device 100 labeled Device 2 (shown in Fig. 20B). The wristwatch-type wearable device 200 and smart phone terminal device 100 are described as examples. However, wearable devices and terminal devices may take other forms. For example, it may be that a pendant or ring could serve as the wearable device 200, while the terminal device 100 could comprise a tablet or personal computer apparatus. In addition, a program is recordable on recording media, such as a memory card or a disk. An application program which processes this invention may be installed in an existing wearable device 200, which would then have some or all of the capability of the embodiments described herein.

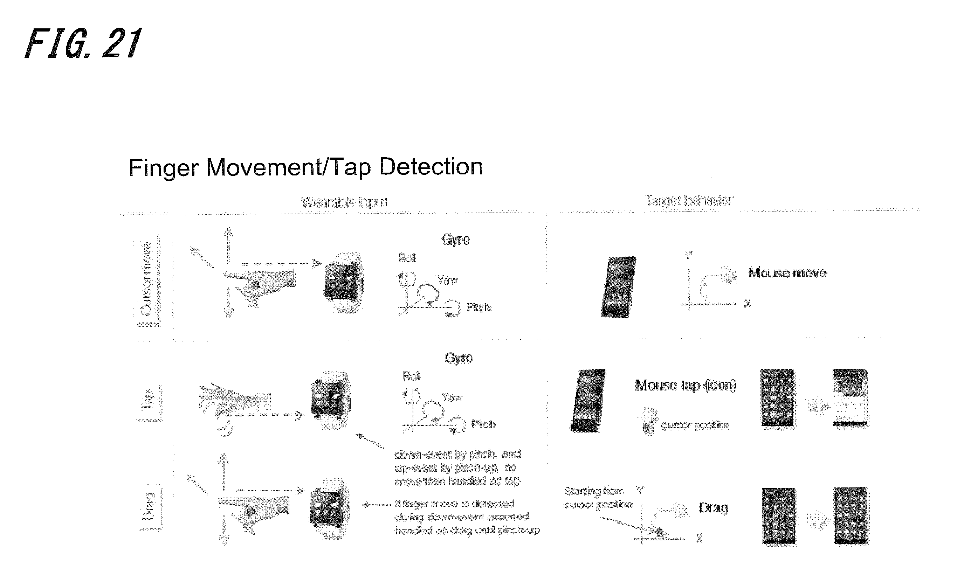

FIG. 21 shows an embodiment of a function in which the wearable device 200 detects commands for cursor movements and actions, including tapping, and dragging based on fine motion of the user's fingers. These motions correspond to gestures, as previously described, such as those involving motion of the user's arm.

However, depending on the sensitivity setting of the wearable device 200, minute finger motions such as those about the roll, yaw, and pitch axes, pointing, pinching and other movements described above can be detected by the motion sensor 208 of the wearable device 200, which responds to such commands accordingly.

Thus a user can control the position of the cursor 191, zoom in and zoom out, drag objects, select and perform other actions on the terminal device 100 in substantially the same way as previously described using finger movement while wearing the wearable device 200. Such actions of cursor 191 include movement of the cursor, tapping and dragging, and flicking described by Figs. 9 through 16.

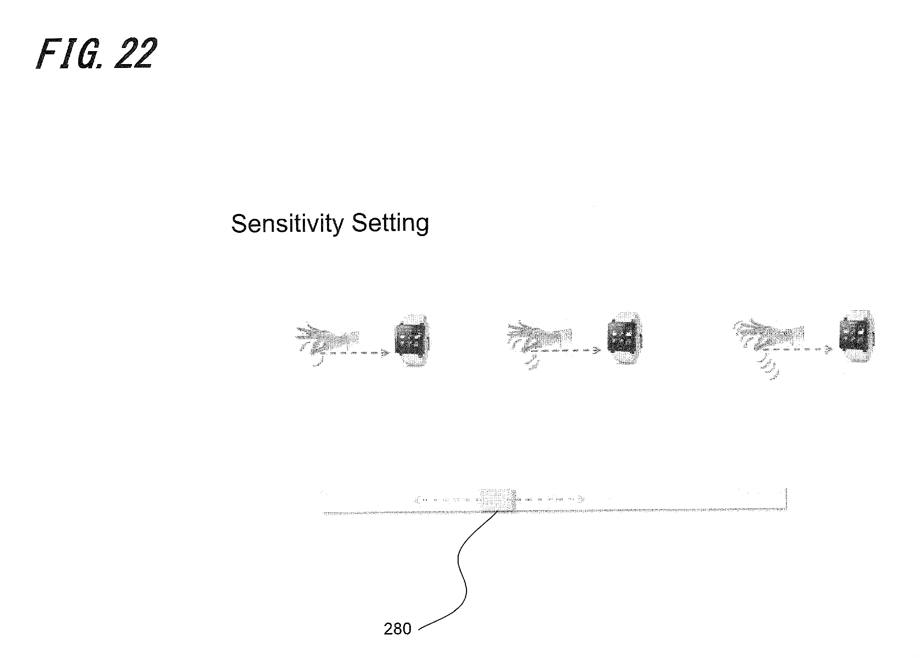

FIG. 22 shows an embodiment of a function in which tap sensitivity of the wearable device 200 is user adjustable through a slider 280. The user moves the slider 280 along a spectrum, from high sensitivity to low sensitivity, to set the sensitivity of the wearable device's 200 response to detection of a tap or finger motion that represents a tap.

A low sensitivity setting requires more deliberate user contact for detecting a tap or finger motion that represents a tap. Such a setting is less likely to inadvertently produce a response to a minor tap. A high sensitivity setting requires less deliberate user contact for detecting a tap. Such a setting makes it easier for the user to trigger a tap but is more likely to inadvertently produce a response to a minor tap.

Providing the ability to adjust this sensitivity is highly desirable as preference of sensitivity can vary widely among users.

Thus, the foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernable variants of the teachings herein, define, in part, the scope of the foregoing claim terminology such that no inventive subject matter is dedicated to the public.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

### CLAUSES

1. A wearable device comprising:
   a motion sensor configured to detect movement of the wearable device;
   a touch panel display;
   a wireless communication interface configured to perform wireless communication with a terminal device; and
   circuitry configured to
      generate data for controlling a display of the terminal device based on at least one of a user input received at the touch panel display or an output of the motion sensor; and
      control the wireless communication interface to transmit the data to the terminal device to control the display of the terminal device.
2. The device of clause 1, wherein
   the circuitry is configured to generate the data for controlling the display of the terminal device based on an output of the motion sensor or touch panel display.
3. The device of clause 2 wherein
   the circuitry is configured to generate, as the data for controlling the display of the terminal device, an instruction based on an output of the motion sensor.
4. The device of clause 2, wherein
   the circuitry is configured to generate, as the data for controlling the display of the terminal device, an instruction based on an output of the touch panel display.
5. The device of clause 3, wherein
   the instruction is an instruction to control an operation of a cursor displayed by the display of the terminal device.
6. An electronic device comprising:
   a display configured to display image based on the execution of an application;
   a wireless interface configured to perform wireless communication with a wearable device; and
   circuitry configured to control the display based on data generated and received from the wearable device corresponding to at least one of a user input received at a touch panel display of the wearable device or an output of a motion sensor of the wearable device.
7. The electronic device of clause 6, wherein
   the circuitry is configured to control the display based on data received from the wearable device and generated based on an output of the motion sensor of the wearable device.

## Claims

1. A system comprising:
a wearable device to be worn by a user, the wearable device comprising
a motion sensor configured to detect movement of the wearable device;
a touch panel display;
a first wireless communication interface configured to wirelessly communicate with a terminal device; and
first circuitry configured to control the wireless communication interface to transmit data obtained based on an output of the motion sensor to a terminal device; and the terminal device comprising
a second wireless interface configured to perform wireless communication with the wearable device;
a display configured to display image based on the execution of an application; and
second circuitry configured to control a display mode of the display based on the data received from the wearable device.

2. The system of claim 1 wherein
the second circuitry is configured to control the display to change a display position of a cursor based on the data received from the wearable device.

3. The system of claim 1, wherein
the second circuitry is configured to perform an operation corresponding to a cursor based on the data received from the wearable device.

4. The system of claim 1, wherein
the second circuitry is configured to control the display to change a display position of a cursor based on data received from the wearable device corresponding to an input received at the touch panel display of the wearable device.

5. The system of claim 4, wherein
an operating mode of the terminal device comprises displaying a display area within which a cursor is positioned , the display area is directly proportional to the touch panel display of the wearable device, and the operation of the cursor corresponds to input data received at the touch panel display of the wearable device.

6. The system of claim 1, wherein
the second circuitry is configured to perform an operation corresponding to a cursor based on data received from the wearable device corresponding to an input received at the touch panel display of the wearable device.

7. The system of claim 1, wherein
the second circuitry is configured to execute a predetermined function when data corresponding to a specific ideogram is received from the wearable device.

8. The system of claim 1, wherein
the first circuitry is configured to switch from communicating with the terminal device to communicating with another terminal device when a predetermined movement is detected based on the output of the motion sensor.

9. The system of claim 1, wherein
the terminal device includes a plurality of terminal devices, and
each terminal device is configured to determine whether the data received from the wearable device is valid, and perform a function based on the data received from the wearable device in a case that the data received from the wearable device is determined to be valid.

10. The system of claim 1, wherein
the first circuitry is configured to instruct the terminal device to perform a function corresponding to specific motion data detected based on an output of the motion sensor.

11. The system of claim 1, wherein
the second circuitry is configured to instruct a second terminal device to display an output of a function performed by the terminal device based on the data received from the wearable device.

12. The system of claim 11, wherein
the second circuitry is configured to control the display to be blank or off while instructing the second terminal device to display the output of the function performed by the terminal device based on the data received from the wearable device.

13. A wearable device comprising:
a motion sensor configured to detect movement of the wearable device;
a touch panel display;
a wireless communication interface configured to perform wireless communication with a terminal device; and
circuitry configured to
generate data for controlling a display of the terminal device based on at least one of a user input received at the touch panel display or an output of the motion sensor; and
control the wireless communication interface to transmit the data to the terminal device to control the display of the terminal device.

14. The device of claim 13, wherein
the wireless interface is configured to communicate with a plurality of terminal devices, and
the circuitry is configured to switch between terminal devices with which to communicate via the wireless interface based on at least one of a user input received at the touch panel display or an output of the motion sensor.

15. The device of claim 13, wherein
the circuitry is configured to generate the data for controlling the display of the terminal device based on an output of the motion sensor or touch panel display.
